## Europäisches Patentamt
## European Patent Office
## Office européen des brevets

(11) Veröffentlichungsnummer: **0 045 015**
**B1**

(12) **EUROPÄISCHE PATENTSCHRIFT**

(45) Veröffentlichungstag der Patentschrift: **24.04.85**

(21) Anmeldenummer: **81105609.2**

(22) Anmeldetag: **17.07.81**

(51) Int. Cl.⁴: **A 01 D 63/04**

(54) **Halmteiler für Erntebergungsmaschinen.**

(30) Priorität: **28.07.80 DE 3028522**

(43) Veröffentlichungstag der Anmeldung:
**03.02.82 Patentblatt 82/05**

(45) Bekanntmachung des Hinweises auf die
Patenterteilung:
**24.04.85 Patentblatt 85/17**

(84) Benannte Vertragsstaaten:
**DE FR GB**

(56) Entgegenhaltungen:
**DE-A-2 454 479**
**DE-C- 581 104**
**FR-A- 854 453**
**FR-E- 44 431**
**US-A-1 792 607**

(73) Patentinhaber: **DEERE & COMPANY**
**1 John Deere Road**
**Moline Illinois 61265 (US)**

(72) Erfinder: **Doll, Otto**
**Scheiderbergstrasse 55**
**D-6660 Zweibrücken (DE)**

(74) Vertreter: **Sartorius, Peter et al**
**DEERE & COMPANY European Office, Patent**
**Department Postfach 503 Steubenstrasse 36-42**
**D-6800 Mannheim 1 (DE)**

Courier Press, Leamington Spa, England.

## Beschreibung

Die Erfindung bezieht sich auf einen Halmteiler für Erntebergungsmaschinen, insbesondere Mähdrescher, der über einer ersten Halterung mittels einer Gelenkvorrichtung an einer an der Erntebergungsmaschine angeschlossenen Enrtebergungsvorrichtung vertikal und horizontal verstellbar an einer zweiten Halterung gelagert und mittels mindestens einer Arretierungsvorrichtung gegen Verstellen sicherbar ist.

Es ist ein Halmteiler für einen Schneidwerktisch eines Mähdreschers bekannt (DE—A—2 454 479), der aus einer ausgeklappten Stellung in eine eingeklappte Stellung verstellbar ist und hierzu mittels eines Scharnieres am Schneidwerktisch angelenkt ist. Außerdem läßt sich der Halmteiler um eine Welle unter Schlitzführung eines Bolzens in vertikaler Ebene verschwenken. Der bekannte Halmteiler läßt sich jedoch nicht in horizontaler Richtung für unterschiedliche Arbeitsstellungen verschieben.

Es ist ferner ein Halmteiler der eingangs aufgeführten Art für einen Mähdrescher bekannt (John Deere 952, Combine, OM—Z 91201), der an der Schniedwerksplattform über einen Glenekbolzen vertikal verschwenkbar gelagert ist und zusätzlich nach Lösen eines Arretierungselementes horizontal feststellbar ist. Eine derartige Verstellung ist jedoch sehr zeitaufwendig.

Demgegenüber liegt der Erfindung die Aufgabe zugrunde, einen an der Erntebergungsvorrichtung vetikal und horizontal verstellbar angeschlossenen Halmteiler so anzuordnen, daß er für unterschiedliche Arbeitsstellungen in kürzester Zeit horizontal verschwenkt werden kann.

Dieses Aufgabe ist dadurch gelöst worden, daß ein Zwischenstück zwischen der ersten Halterung des Halmteilers und einer an der Erntebergungsvorrichtung vorgesehenen zweiten Halterung einsetzbar ist und nach Entfernen des Zwischenstückes der Halmteiler von mindestens einer ersten in mindestens eine weitere Arbeitsstellung verschwenkbar und in dieser nach Einsetzen des Zwischenstückes durch Aufnahme der Arretierungsvorrichtung in einer im Zwischenstück vorgesehenen Durchdringung gegen weiteres Verschwenken in der Horizontalebene sicherbar ist. Da lediglich durch Herausnahme des Zwischenstückes der Halmteiler auf einfache Weise in Horizontalrichtung an der Erntebergungsvorrichtung verstellbar gelagert ist, kann er beispielsweise aus einer Arbeitsstellung, in der er etwa parallel zur Außenseite der Erntebergungsvorrichtung verläuft, in eine zweite Arbeitsstellung verschwenkt werden, in der er mit der Außenseite der Erntebergungsvorrichtung und seiner Mittellinie einen spitzen Winkel einschließt. Auf diese Weise wird der Arbeitsbereich der Schneidwerksplattform vergrößert, da die Halmteilerspitze mit Bezug auf die erste Arbeitsstellung des Halmteilers weiter außen liegt. Durch die Verwendung eines Zwischenstückes wird also durch erneutes Einsetzen des Zwischenstückes eine gute Anlage für den Halmteiler geschaffen, so daß ein horizontales Verschwenken des Halmteilers im Arbeitseinsatz ausgeschlossen ist. Um unterschiedliche Arbeitsstellungen zu erreichen, ist es ferner vorteilhaft, daß das Zwischenstück konisch ausgebildet ist, wobei die Hulterung des Halmteilers gegen eine dritte an der Erntebergungsvorrichtung vorgesehene Halterung zusätzlich anliegt. Durch die konische Ausbildung des Zwischenstückes wird auf einfache Weise sichergestellt, daß der Halmteiler in kürzester Zeit auf zwei unterschiedliche Arbeitsstellungen einstellbar ist. Da die Halterung des Halmteilers zwischen den beiden Halterungen der Erntebergungsvorrichtung angeordnet ist, die auch zur Aufnahme des Zwischenstückes vorgesehen ist, erhält man eine einfache Lagerung des Halmteilers an der Erntebergungsvorrichtung mit der Möglichkeit, in kürzester Zeit eine Horizontalverschwenkung des Halmteilers herbeizuführen.

In weiterer Ausgestaltung der Erfindung ist es vorteilhaft, daß die Arretierungsvorrichtung einen in in der zweiten und dritten Halterung und der ersten Halterung des Halmteilers vorgesehene Durchdringungen einsetzbaren Feststellteil aufweist und die Halterung des Halmteilers eine nach oben offene Fangausnehmung zur Aufnahme eines die Halterungen verbindenden Gelenkbolzens aufweist, um den der Halmteiler schwenkt. Durch die vorteilhafte Ausbildung der einzelnen Halterungen zowie des Zwischenstückes in Verbindung mit den Durchdringungen zur Aufnahme des Feststellteiles der Arretierungsvorrichtung läßt sich ein Umrüsten des Halmteilers leicht bewerkstelligen. Hierzu ist es vorteilhaft, daß die in der ersten Halterung des Halmteilers vorgesehene Durchdringung als Längsschlitz ausgebildet ist, der eine Schwenkbewegung des Halmteilers um den Gelenkbolzen zuläßt. Durch die Verwendung eines Längsschlitzes ist eine einfache Verschwenkbewegung des Halmteilers um den Gelenkbolzen in einer vertikal verlaufenden Ebene möglich.

Ferner ist es vorteilhaft, daß der Feststellteil als U-Bügel mit einem längeren Schenkel ausgebildet ist, der in einer an der zweiten Halterung der Erntebergungsvorrichtung vorgesehenen Führung gegen die Wirkung einer Feder verschiebbar gelagert ist und der mit seinem kurzen Schenkel aus der Bohrung der zweiten und dritten Halterung und des Zwischenstückes herausziehbar ist. Außerdem ist es vorteilhaft, daß der kürzere Schenkel des U-Bügels in seiner unwirksamen Stellung gegen die Außenseite der an der Erntebergungsvorrichtung vorgesehenen zweiten Halterung zur Anlage kommt und daß das Zwischenstück eine untere und eine obere Bohrung aufweist, wobei die obere Bohrung auf dem Gelenkbolzen verschiebbar gelagert ist. Durch die Verwendung des Feststellteiles, der als U-Bügel ausgebildet sein kann, kann die Halterung des Halmteilers in einem bestimmten Bereich um den Gelenkbolzen schwenken, ohne daß hierzu die Fangausnehmung vom Gelenkbolzen abgezogen zu werden braucht. Durch Zurückziehen des Feststellteiles wird die in der Halterung des Halmteilers vorgesehene Schlitzführung freigegeben, wobei der kürzere Teil bzw. der Schenkel des Feststellteiles gegen die Außenseite der Erntebergungsvorrichtung zur Anlage gebracht werden kann, wenn der Feststellteil in dieser Stellung etwas gedreht wird. In dieser Stellung des Feststellteiles kann die Fangausnehmung der Halterung von dem Gelenkbolzen abgezogen und der Halmteiler nach vorne herausgenommen werden, so daß dann das Zwischenstück für eine zweite Stellung des Halmteilers wieder zwischen der Halterung des Halmteilers und der anderen Halterung der Erntebergungsvorrichtung eingesetzt werden kann. Nach Entfernen der Halterung des Halmteilers aus dem Bereich des Zwischenstückes kann das Zwischenstück auf dem Gelenkbolzen in vertikaler Richtung so weit verschoben werden, bis die Halterung des Halmteilers erneut zwischen der einen Seite des Zwischenstückes und der anderen Seite der Halterung eingefügt werden kann.

Jedoch ist es auch vorteilhaft, daß das Zwischenstück drei mit vertikalem Abstand zueinander angeordnete Bohrungen aufweist, wobei die obere Bohrung zur Aufnahme des Gelenkbolzens und die untere Bohrung zur Aufnahme des längeren Schenkels des U-Bügels dient, der in der Bohrung verschiebbar gelagert ist. Durch diese Anordnung ist gewährleistet, daß die Bohrungen der Halterung und des Zwischenstückes zur Aufnahme des kürzeren Schenkels des Feststellteiles immer fluchten. Durch die Verwendung des konisch ausgebildeten Zwischenstückes ist es also auf einfache Weise möglich, den Halmteiler in mindestens zwei Arbeitsstellungen an der Erntebergungsvorrichtung festzulegen.

In der Zeichnung wird ein Ausführungsbeispiel eines Halmteilers nach der Erfindung erläutert. Es zeigt

Fig. 1 eine Seitenansicht eines Halmteilers mit einer Arretierungsvorrichtung,

Fig. 2 eine Draufsicht eines Hamteilers,

Fig. 3 eine Teilansicht einer Arretierungsvorrichtung für den Halmteiler im Schnitt entlang der Linie 3—3 gemäß Fig. 1,

Fig. 4 ein weiteres Ausführungsbeispiel der Arretierungsvorrichtung.

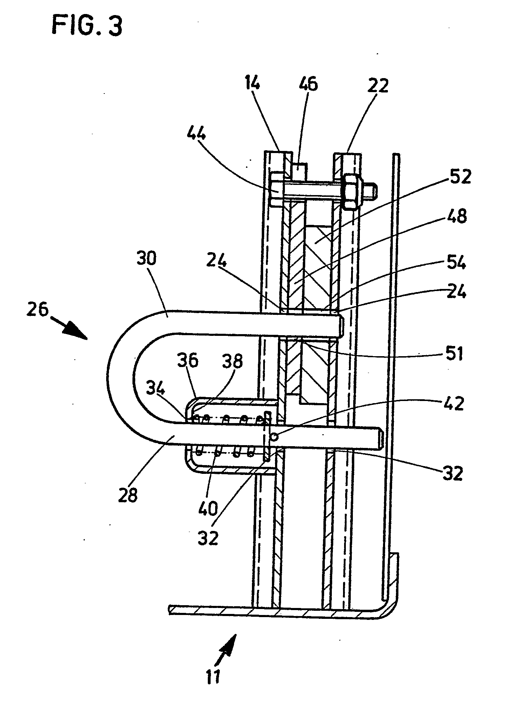

In der Zeichnung ist mit 10 eine Gleitkufe einer in der Zeichnung nicht dargestellten Erntebergungsvorrichtung für einen Mähdrescher bezeichnet, die eine Schneidwerksvorrichtung 12 aufweist. Vor der Schneidwerksvorrichtung 12 befindet sich eine Halterung 14, die aus zwei konvergierend zueinander verlaufenden Schenkeln 16 und 18 und einem Steg 20 besteht, der die beiden Schenkel 16 und 18 verbindet. Eine zweite Halterung 22 ist mit Abstand zur ersten Halterung 14 angeordnet und spiegelbildlich ausgebildet. Die Halterung 14 sowie die Halterung 22 sing über einen Tragarm 11 mit dem Halmteiler 50 der Erntebergungsvorrichtung fest verbunden. In den Halterungen 14 und 22 ist je eine Bohrung 24 vorgesehen, die zur Aufnahme eines Feststellteils bzw. eines U-Bügels 26 dienen. Wie insbesondere aus Fig. 3 hervorgeht, weist der Bügel 26 einen langen Schenkel 28 und einen kurzen Schenkel 30 auf, wobei der kurze Schenkel 30 sich durch die oberen Bohrungen 24 der beiden Halterungen 14 und 22 erstreckt. Mit Abstand zu den Bohrungen 24 der Halterungen 14 und 22 befinden sich zwei weitere, untereinander fluchtende untere Bohrungen 32 in den Halterungen 14 und 22, die zur Aufnahme des längeren Schenkels 28 des U-Bügels 26 dienen.

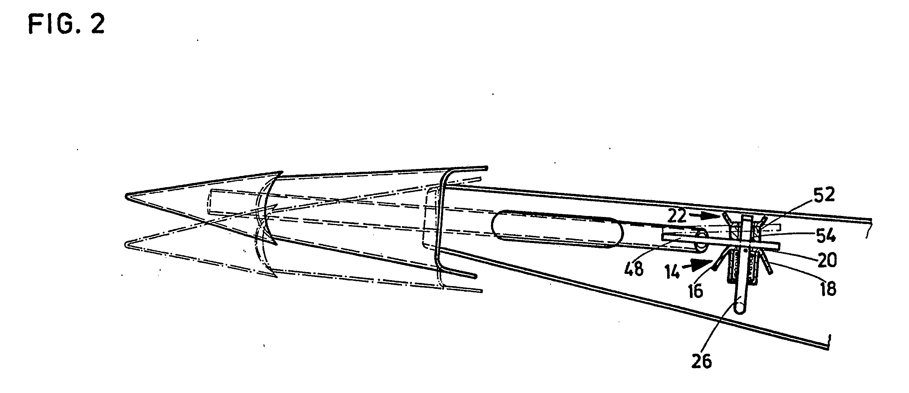

Der längere Schenkel 28 des U-Bügels 26 ist in einer Führung 34 verschiebbar gelagert, die aus einem U-Profil bestehen kann und zwischen ihrem Steg 36 und der inneren Oberfläche der Halterung 14 eine Feder 40 aufnimmt. Die Feder 40 legt sich mit ihrem einen Ende gegen die Oberfläche 38 des Steges 36 der Führung 34 und mit ihrer anderen Seite gegen ein am Schenkel 28 vorgesehenes Arretierungselement 42 an. Auf diese Weise wird der Schenkel 28 des U-Bügels 26 in der Bohrung 32 gehalten. Die oberen Enden der Halterungen 14 und 22 sind über einen Gelenkbolzen 44 miteinander verbunden, auf den eine Fangausnehmung 46 einer Halterung 48 für einen Halmteiler 50 aufschiebbar ist. Die Halterung 48 des Halmteilers 50 wird hierzu zwischen die beiden Halterungen 14 und 22 eingeschwenkt und weist zur Aufnahme des Schenkels 30 eine Längsbohrung 51 auf. Zwischen der zweiten Halterung 22 der Erntebergungsvorrichtung und der Halterung 48 des Halmteilers 50 kann gemäß Fig. 2 ein sich nach vorne verjüngendes Zwischenstück 52 vorgesehen werden, das hierzu ebenfalls mit einer Durchdringung 54 ausgerüstet ist, um auf den kürzeren Schenkel 30 des U-Bügels zwischen der Halterung 48 und der Halterung 22 aufgesetzt zu werden. Durch Zurückziehen des Bügels 26 wird die Durchdringung 54 des Zwischenstückes 52 freigegeben, so daß das Zwischenstück 52 aus dem Zwischenraum zwischen den beiden Halterungen 14 und 22 herausgenommen werden kann, um erneut zwischen der ersten Halterung 14 und der Halterung 48 des Halmteilers 50 eingesetzt zu werden, nachdem dieser aus seiner ersten Stellung (Darstellung in ausgezogenen Linien) in seine zweite Stellung (gestrichelte Darstellung) verschwenkt worden ist.

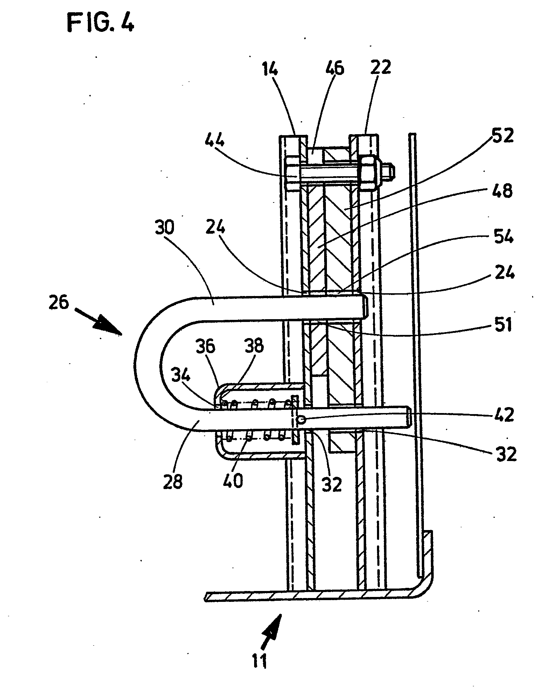

In vorteilhafter Weise kann auch das Zwischenstück 52 längs ausgebildet und mit einer oberen und einer oder zwei unteren Bohrungen ausgerüstet sein (Fig. 4), wobei die obere Bohrung zur Aufnahme des Gelenkbolzens 44 und die unteren Bohrungen zur Aufnahme der Schenkel 28 und 30 des Feststellteiles 26 dienen. Durch Herausnahme des kürzeren Schenkels 30 des Feststellteiles 26 aus der mittleren Bohrung 54 des Zwischenstückes 52 kann nun die Halterung 48 des Halmteilers 50 herausgezogen und das Zwischenstück 52 auf dem Gelenkbolzen 44 und dem längeren Schenkel 28 in eine zweite Stellung verschoben werden. Danach kann die Halterung 48 wieder zwischen die Halterungen 14, 22 eingeschoben und mittels des kürzeren Schenkels festgesetzt werden.

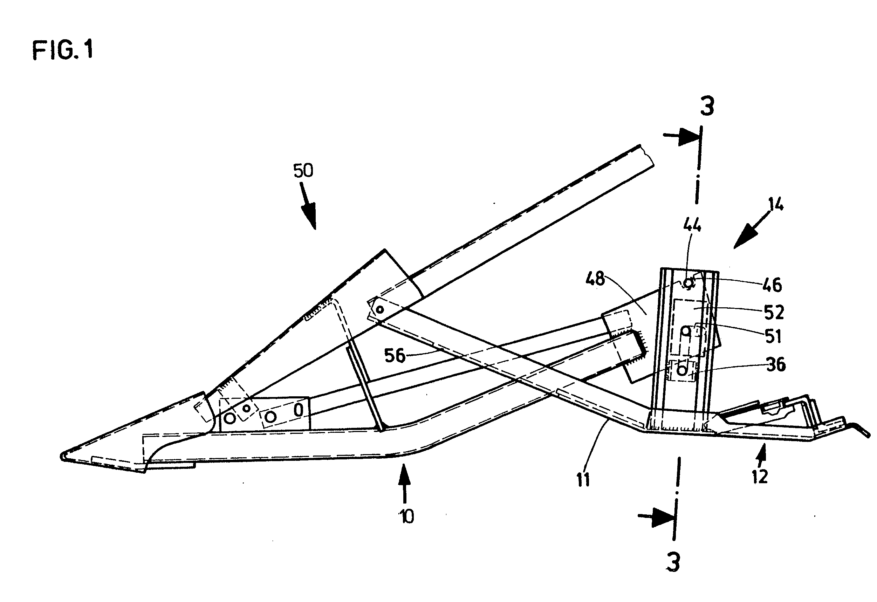

Wie aus Fig. 1 hervorgeht, ist die in der Halterung 48 vorgesehene Durchdringung zur Aufnahme des Schenkels 30 als Längsbohrung bzw. Längsschlitz 51 ausgebildet, so daß der Halmteiler 50 um den Gelenkbolzen 44 in einem bestimmten Bereich schwenken kann. Der Halmteiler 50 erstreckt sich durch eine in dem Tragarm 11 der Erntebergungsvorrichtung vorgesehene Schlitzöffnung 56, die durch ihre obere und untere Begrenzung den Schwenkbereich des Halmteilers bestimmt. Durch die vorteilhafte Anordnung der Feder 40 wird immer ein automatisches Einrasten des Schenkels 30 des Bügels 26 gewährleistet, wenn die Bohrungen 24 der Halterungen 14 und 22 mit der Bohrung 54 des Zwischenstückes und der Längsöffnung 51 der Halterung 48 fluchten.

**Patentansprüche**

1. Halmteiler für Erntebergungsmaschinen, insbesondere Mähdrescher, der über einer ersten Halterung (48) mittels einer Gelenkvorrichtung an einer an der Erntebergungsmaschine angeschlossenen Erntebergungsvorrichtung vertikal und horizontal verstellbar an einer zweiten Halterung (14) gelagert und mittels mindestens einer Arretierungsvorrichtung (26) gegen Verstellen sicherbar ist, dadurch gekennzeichnet, daß ein Zwischenstück (52) zwischen der ersten Halterung (48) des Halmteilers (50) und der an der Erntebergungsvorrichtung vorgesehenen zweiten Halterung (14) einsetzbar ist und daß nach Entfernen des Zwischenstückes (52) der Halmteiler (50) von mindestens einer ersten in mindestens eine weitere Arbeitsstellung verschwenkbar und in dieser nach Einsetzen des Zwischenstückes (52) durch Aufnahme der Arretierungsvorrichtung (26) in einer im Zwischenstück (52) vorgesehenen Durchdringung (54) gegen weiteres Verschwenken in der Horizontalebene sicherbar ist.

2. Halmteiler nach Anspruch 1, dadurch gekennzeichnet, daß das Zwischenstück (52) konisch ausgebildet ist und die Halterung (48) des Halmteilers (50) gegen eine dritte an der Erntebergungsvorrichtung vorgesehene Halterung (22) zusätzlich anliegt.

3. Halmteiler nach Anspruch 1 und 2, dadurch gekennzeichnet, daß die Arretierungsvorrichtung einen in in der zweiten und dritten Halterung (14, 22) und der ersten Halterung (48) des Halmteilers (50) vorgesehene Durchdringungen (24, 32, 51) einsetzbaren Feststellteil (26) aufweist und die Halterung (48) des Halmteilers (50) eine nach oben offene Fangausnehmung (46) zur Aufnahme eines die Halterungen (14, 22) verbindenden Gelenkbolzens (44) aufweist um den der Halmteiler (50) schwenkt.

4. Halmteiler nach einem oder mahreren der vorhergehenden Ansprüche, dadurch gekennzeichnet, daß die in der ersten Halterung (48) des Halmteilers (50) vorgesehene Durchdringung als Längsschlitz (51) ausgebildet ist, der eine Schwenkbewegung des Halmteilers (50) um den Gelenkbolzen (44) zuläßt.

5. Halmteiler nach einem oder mehreren der vorhergehenden Ansprüche, dadurch gekennzeichnet, daß der Feststellteil als U-Bügel (26) mit einem längeren Schenkel (28) ausgebildet ist, der in einer an der zweiten Halterung (14) der Erntebergungsvorrichtung vorgesehenen Führung (34) gegen die Wirkung einer Feder (40) verschiebbar gelagert ist und der mit seinem kurzen Schenkel aus der Bohrung (32, 54) der zweiten und dritten Halterung (14, 22) und des Zwischenstückes (52) herausziehbar ist.

6. Halmteiler nach einem oder mehreren der vorhergehenden Ansprüche, dadurch gekennzeichnet, daß der kürzere Schenkel (30) des U-Bügels (26) in seiner unwirksamen Stellung gegen die Außenseite der an der Erntebergungsvorrichtung vorgesehenen zweiten Halterung (14) zur Anlage kommt.

7. Halmteiler nach einem oder mehreren der vorhergehenden Ansprüche, dadurch gekennzeichnet, daß das Zwischenstück (52) eine untere und eine obere Bohrung aufweist, wobei die obere Bohrung auf dem Gelenkbolzen (44) verschiebbar gelagert ist.

8. Halmteiler nach einem oder mehreren der vorhergehenden Ansprüche, dadurch gekennzeichnet, daß das Zwischenstück (52) drei mit vertikalem Abstand zueinander angeordnete Bohrungen aufweist, wobei die obere Bohrung zur Aufnahme des Gelenkbolzens (44) und die untere Bohrung zur Aufnahme des längeren Schenkels (28) des U-Bügels (26) dient, der in der Bohrung verschiebbar gelagert ist.

**Revendications**

1. Diviseur pour machines de récolte, en particulier pour moissonneuses-batteuses, monté de façon déplaçable verticalement et horizontalement, par l'intermédiaire d'un premier organe de montage (48), au moyen d'un dispositif d'articulation, sur un ensemble de récolte reccordé à la machine de récolte, sur un second organe de montage (14), et pouvant être immobilisé d'une manière s'opposant à son déplacement au moyen d'au moins un dispositif de verrouillage (26), caractérisé en ce qu'une pièce intercalaire (52) peut être insérée entre le premier organe de montage (48) du diviseur (50) et le second organe de montage (14) prévu sur l'ensemble de récolte et en ce que, après dégagement de la pièce intercalaire (52), le diviseur (50) peut être amené par basculement d'au moins une première position de travail dans au moins une autre position de travail, et peut être immobilisé dans cette dernière position, après insertion en place de la pièce intercalaire (52), par réception du dispositif de verrouillage (26) dans un orifice (54) prévu dans la pièce intercalaire (52), d'une manière s'opposant à tout autre basculement ou pivotement dans le plan horizontal.

2. Diviseur suivant la Revendication 1, caractérisé en ce que la pièce intercalaire (52) a une forme conique, l'organe de montage (48) du diviseur (50) s'appliquant en outre contre un troisième organe de montage (22) prévu sur l'ensemble de récolte.

3. Diviseur suivant les Revendications 1 et 2, caractérisé en ce que le dispositif de verrouillage comporte un élément de blocage (26) pouvant être inséré dans des orifices (24, 32, 51) prévus dans le second et le troisième organes de montage (14, 22) et dans le premier organe de montage, (48) du diviseur, et en ce que l'organe de montage (48) du diviseur (50) présente un logement (46) ouvert en direction du haut pour la réception d'un axe d'articulation (44) reliant les organes de montage (14, 22), le diviseur (50) pivotant autour de cet axe.

4. Diviseur suivant l'une quelconque des revendications précédentes, caractérisé en ce que l'orifice prévu dans le premier organe de montage (48) du diviseur (50) se présente sous la forme d'une fente allongée (51) permettant un mouvement de pivotement du diviseur (50) autour de l'axe d'articulation (44).

5. Diviseur suivant l'une quelconque des revendications précédentes, caractérisé en ce que l'élément de blocage se présente sous la forme d'un étrier (26) comportant une branche plus longue (28), montée de façon déplaçable en antagonisme à l'action d'un ressort (40) dans un guide (34) prévu sur le second organe de montage (14) de l'ensemble de récolte, et pouvant être dégagé par traction par sa branche plus courte du perçage (32, 54) des second et troisième organes de montage (14, 22) et de la pièce intercalaire (52).

6. Diviseur suivant l'une quelconque des revendications précédentes, caractérisé en ce que la branche plus courte (30) de l'étrier (26) vient s'appliquer, en position de repos, contre la face extérieure du second organe de montage (14) prévu sur l'ensemble de récolte.

7. Diviseur suivant l'une quelconque des revendications précédentes, caractérisé en ce que la pièce intercalaire (52) comporte un perçage inférieur et un perçage supérieur, le perçage supérieur pouvant coulisser sur l'axe d'articulation (44).

8. Diviseur suivant l'une quelconque des revendications précédentes, caractérisé en ce que la pièce intercalaire (52) comporte trois perçages écartés verticalement l'un de l'autre, le perçage supérieur servant à la réception de l'axe d'articulation (44) et le perçage inférieur à la réception de la branche plus longue (28) de l'étrier (26), qui est montée de façon coulissante dans ce perçage.

**Claims**

1. A stalk divider for crop pick-up machines, in particular combine harvesters, which, by way of a first mounting (48), is mounted vertically and horizontally displaceably to a second mounting (14) by means of a pivot means on a crop pick-up device connected to the crop pick-up machine, and can be secured against displacement by means of at least one arresting device (26), characterised in that an intermediate member (52) can be fitted between the first mounting (48) of the stalk divider (50) and the second mounting (14) which is provided on the crop pick-up device, and that after the intermediate member (52) has been removed, the stalk divider (50) is pivotal from at least one first into at least one further operating position and can be secured in said further operating position against further pivotal movement in the horizontal plane, after insertion of the intermediate member (52), by the arresting device (26) being received in an opening (54) in the intermediate member (52).

2. A stalk divider according to claim 1 characterised in that the intermediate member (52) is of a conical configuration and the mounting (48) of the stalk divider (50) additionally bears against a third mounting (22) provided on the crop pick-up device.

3. A stalk divider according to claim 1 and claim 2 characterised in that the arresting device has a securing member (26) which can be inserted into openings (24, 32, 51) provided in the second and third mountings (14, 22) and the first mounting (48) of the stalk divider (50) and the mounting (48) of the stalk divider (50) has an upwardly open catch recess (46) for receiving a pivot pin (44) which connects the mountings (14, 22) and around which the stalk divider (50) pivots.

4. A stalk divider according to one or more of the preceding claims characterised in that the opening in the first mounting (48) of the stalk divider (50) is formed as a slot (51) which permits a pivotal movement of the stalk divider (50) about the pivot pin (44).

5. A stalk divider according to one or more of the preceding claims characterised in that the securing member is in the form of a U-shaped loop member (26) having a longer limb portion (28), which is mounted displaceably against the force of a spring in a guide means (34) provided on the second mounting (14) of the crop pick-up device, and which can be drawn with its short limb portion out of the bore (32, 54) in the second and third mountings (14, 22) and the intermediate member (52).

6. A stalk divider according to one or more of the preceding claims characterised in that the shorter limb portion (30) of the U-shaped loop member (26), in its inoperative position, comes to bear against the outside of the second mounting (14) provided on the crop pick-up device.

7. A stalk divider according to one or more of the preceding claims characterised in that the intermediate member (52) has a lower and an upper bore, wherein the upper bore is mounted displaceably on the pivot pin (44).

8. A stalk divider according to one or more of the preceding claims characterised in that the intermediate member (52) has three bores which are disposed at vertical spacings from each other, wherein the upper bore serves to receive the pivot pin (44) and the lower bore serves to receive the longer limb portion (28) of the U-shaped loop member (26), which is mounted displaceably in the bore.

FIG. 1

FIG. 2

52
54
20
18
22
48
16
14
26

2

0 045 015

FIG. 3

3

# FIG. 4